# EUROPEAN PATENT APPLICATION

(11) **EP 4 353 136 A1**
(43) Date of publication of application: **17.04.2024**
(21) Application number: 22819157.3
(22) Date of filing: 24.03.2022
(51) Int. Cl.: A47L 11/24

(54) **CLEANING METHOD AND APPARATUS, SWEEPER, AND COMPUTER-READABLE MEDIUM**

(30) Priority: 11.06.2021 CN 202110654811
(71) Applicant: Beijing Roborock Innovation Technology Co., Ltd., Beijing 102206 (CN)
(72) Inventor: NIU, Yansheng, Beijing 102206 (CN)
(74) Representative: Cabinet Beau de Loménie
(86) International application number: PCT/CN2022/082859
(87) International publication number: WO 2022/257552

(57) **Abstract**

A cleaning method and apparatus, a sweeper, and a computer-readable medium. The method comprises: by means of turning back along a first cleaning direction, performing first cleaning on a region to be cleaned; and on the basis of cleaning parameters meeting a condition, performing second cleaning on the region by means of turning back along a second cleaning direction, wherein the second cleaning direction is perpendicular to the first cleaning direction. Hence, when the cleaning parameters i.e. certain trigger conditions are met, the sweeper will be triggered to perform second cleaning. Since the first cleaning direction is perpendicular to the second cleaning direction and the region is cleaned by means of turning back, the region is efficiently cleaned without omitting any spots. Meanwhile, conditions for triggering second cleaning are set, and users may set the conditions for triggering second cleaning according to their own needs, so as to satisfy the diverse selections of the users at a region to be cleaned under different conditions, thus providing users with a good experience.

## Description

This application claims priority from Chinese Patent Application No. 202110654811.3 filed on June 11, 2021, which is hereby incorporated by reference herein in its entirety.

### TECHNICAL FIELD

The present disclosure relates to the field of intelligent household appliances, and more particularly, to a sweeping method and apparatus, a sweeper, and a computer-readable medium.

### BACKGROUND

In general, in order to provide an area to be swept with a certain degree of cleanliness, the area to be swept will be swept several times. However, existing sweepers tend to mechanically repeat the same sweeping path when sweeping multiple times, which may easily lead to omission of some places. In other cases, the default configuration that the area to be swept will be swept multiple times to achieve a certain level of cleanliness may cause a lot of troubles to a user or time-consuming user experience. For example, the area to be swept, if it is large, may require a great time to clean it once. However, the user may have other needs for the area in a certain period of time, and the multiple times of cleaning as provided by default may bring poor experience to the user.

### SUMMARY

### (I) Object

An object of the present disclosure is to provide a sweeping method and apparatus, a sweeper, and a computer-readable medium to solve the technical problem of a sweeper that misses some places when performing second sweeping.

### (II) Technical Solutions

In order to solve the aforesaid problem, the present disclosure provides a sweeping method. The method includes:
performing first sweeping on an area to be swept in a turn-back manner along a first sweeping direction; and
performing, based on a sweeping parameter fulfillment condition, second sweeping on the area to be swept in a turn-back manner along a second sweeping direction, where the second sweeping direction is perpendicular to the first sweeping direction.

In some other embodiments, prior to performing the second sweeping on the area to be swept in the turn-back manner along the second sweeping direction, the method further includes:
acquiring a sweeping parameter; and
determining whether the sweeping parameter fulfills a preset condition.

In some other embodiments, the acquiring the sweeping parameter includes: acquiring at least one of following: a time period required to perform the first sweeping on the area to be swept, or a number of sweeping repetitions on the area to be swept.

In some other embodiments, the sweeping parameter fulfillment condition includes:
a fulfillment condition for at least one of following: the time period required to perform the first sweeping on the area to be swept, or the number of sweeping repetitions on the area to be swept.

In some other embodiments, the fulfillment condition for the time period required to perform the first sweeping on the area to be swept includes: the time period required to perform the first sweeping on the area to be swept being less than a threshold value.

In some other embodiments, the fulfillment condition for the number of sweeping repetitions on the area to be swept includes:
the number of sweeping repetitions on the area to be swept being greater than 1.

According to a second aspect of the present disclosure, the present disclosure further provides a sweeping apparatus, which includes:
a first sweeping module, configured to perform first sweeping on an area to be swept in a turn-back manner along a first sweeping direction; and
a second sweeping module, configured to perform, based on a sweeping parameter fulfillment condition, second sweeping on the area to be swept in a turn-back manner along a second sweeping direction, where the second sweeping direction is perpendicular to the first sweeping direction.

According to a third aspect of the present disclosure, the present disclosure further provides a sweeper, which is configured to perform the method as described in any one of the above embodiments.

According to a fourth aspect of the present disclosure, the present disclosure further provides a computer-readable medium, on which computer-readable instructions are stored, where the computer-readable instructions cause the sweeper to perform the method as described in any one of the above embodiments.

### (III) Beneficial effects

Thus, the sweeper will be triggered to perform the second sweeping when the condition for the sweeping parameter is satisfied, i.e., under a certain triggering condition. The condition for triggering the second sweeping is preset, and the user can set the condition for triggering the second sweeping according to his/her own needs, so as to fulfill the user's diversified selections for the area to be swept under different conditions, thereby giving the user a better experience. The area to be swept is swept in a turn-back manner along the first sweeping direction and the second sweeping direction that are perpendicular to each other, such that the omission of the area to be swept as caused by the mechanical sweeping repetitions on the area to be swept by the sweeper can be avoided. In other words, the sweeping method according to the present disclosure satisfies the requirement that the area to be swept can be efficiently swept without any omission when the second sweeping is triggered.

### BRIEF DESCRIPTION OF THE DRAWINGS

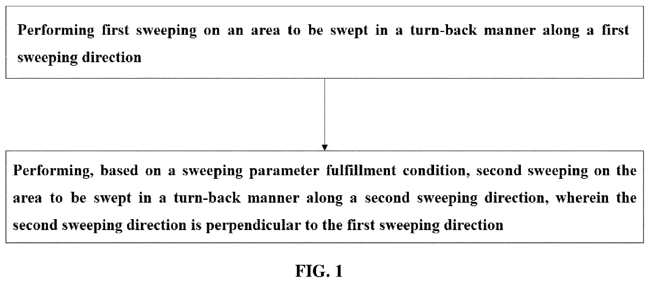

FIG. 1 is a flowchart of a sweeping method according to the present disclosure.

### DETAILED DESCRIPTION

In order to make the objects, technical solutions, and advantages of the present disclosure clearer, the present disclosure is described in further detail below with reference to specific embodiments and the accompanying drawings. It should be understood that the description is merely exemplary, and is not intended to limit the scope of the present disclosure. Moreover, in the following description, the description of well-known structures and techniques is omitted to avoid unnecessarily confusing the concept of the present disclosure.

In view of above, the present disclosure provides a sweeping method. The method includes: performing first sweeping on an area to be swept in a turn-back manner along a first sweeping direction; and performing, based on a sweeping parameter fulfillment condition, second sweeping on the area to be swept in a turn-back manner along a second sweeping direction, where the second sweeping direction is perpendicular to the first sweeping direction.

The manner for acquiring the first sweeping direction is not specifically limited, and it may, for example, be a preset sweeping direction in the system according to different areas to be swept, an artificially set sweeping direction, or a first sweeping direction determined by the system according to certain requirements. The specific direction of the first sweeping direction is not specifically limited, and the user may limit the first sweeping direction by himself/herself or the system may determine the first sweeping direction by itself according to a certain preset condition. In an embodiment, the first sweeping direction is not a single direction, but refers to an overall traveling direction of the sweeping apparatus in the turn-back movement during the first sweeping. For example, the first sweeping direction may be understood as a north-south direction, if the sweeping apparatus starts traveling to the south or north in the first sweeping, and there are one or more turn-back movements to the north and/or south during the process. Similarly, the second sweeping direction is not a single direction, but refers to an overall traveling direction of the sweeping apparatus in the turn-back movement during the second sweeping. For example, the second sweeping direction may be understood as an east-west direction, if the sweeping apparatus starts traveling to the east or west in the second sweeping, and there are one or more turn-back movements to the west and/or east during the process.

Along the first sweeping direction, the first sweeping is performed on the area to be swept in the turn-back manner. That is, the first sweeping is performed on the area to be swept in an S-shaped sweeping path or a zigzag sweeping path. Alternatively, it can be understood that when the sweeper sweeps to the boundary of the area to be swept, the area to be swept may be further swept by making a 180° turn or a U-turn, and the shape of the turn or the length of the path crossed by the turn is not specifically limited.

Based on the sweeping parameter fulfillment condition, the sweeping parameter and the fulfillment condition are not specifically limited herein. For example, the parameter may be a sweeping time, a number of sweeping times, or a number of times of turn-back movements. Thus, the corresponding fulfillment condition means that the sweeping time fulfills a preset time, the number of sweeping times fulfills a condition, or the number of times of turn-back movements fulfills a condition. For example, a total sweeping time may be preset. If the time period for the first sweeping on the area to be swept along the first sweeping direction in a turn-back manner is less than the total sweeping time, the sweeping parameter satisfies the condition, and the second sweeping may be performed.

Such a result based on the sweeping parameter fulfillment condition may be a determination result given by the method in the technical solution proposed by the present disclosure, or such a determination result as received. That is, the present sweeping method may include the determination step, or may receive the determination result without including such a determination step.

The second sweeping direction is perpendicular to the first sweeping direction, and the second sweeping also sweeps the area to be swept in a turn-back manner. Therefore, the first sweeping path and the second sweeping path form a #-shaped sweeping path in the area to be swept. Alternatively, it can be understood that the two sweeping paths form a net-type sweeping path in the area to be swept, such that the area to be swept can be efficiently swept without any omission when the second sweeping is performed.

It can thus be seen that the sweeper will be triggered to perform the second sweeping when the condition for the sweeping parameter is satisfied, i.e., under a certain triggering condition. Meanwhile, the condition for triggering the second sweeping is preset, and the user can set the condition for triggering the second sweeping according to his/her own needs, so as to fulfill the user's diversified selections for the area to be swept under different conditions, thereby giving the user a better experience. The area to be swept is swept in a turn-back manner along the first sweeping direction and the second sweeping direction that are perpendicular to each other, such that the omission on the area to be swept as caused by the mechanical sweeping repetitions on the area to be swept by the sweeper can be avoided. In other words, the sweeping method according to the present disclosure satisfies the requirement that the area to be swept can be efficiently swept without any omission when the second sweeping is triggered.

In some other embodiments, prior to performing the second sweeping on the area to be swept in the turn-back manner along the second sweeping direction, the method further includes:
acquiring the sweeping parameter; and determining whether the sweeping parameter fulfills a preset condition.

In an embodiment, the condition for triggering the second sweeping is preset, and the user may set the condition for triggering the second sweeping according to his/her own needs, so as to fulfill the user's diversified selections for the area to be swept under different conditions, thereby giving the user a better experience.

In some other embodiments, the acquiring the sweeping parameter includes: acquiring at least one of following: a time period required to perform the first sweeping on the area to be swept, or a number of sweeping repetitions on the area to be swept.

In an embodiment, selecting the parameter as the first sweeping time for the area to be swept is to bring the user a better experience and prevent the sweeper from working too long to affect the user's life and mood. The total sweeping time may be a value set by the system, which may namely be a total time that the user can accept the sweeper to work in a certain area as obtained according to the big data, or a total time set by the user according to his/her own needs.

In an embodiment, selecting the parameter as the number of sweeping repetitions can satisfy the need for the degree of cleanliness of the area to be swept. For example, in general sweeping for three times can satisfy the user's need for cleanliness, and thus the number of repetitions may be defaulted to be 3 or set by the user to be 3. The number of sweeping repetitions may be a value set by the system by default, or set by the user according to his/her own needs.

In some other embodiments, the sweeping parameter fulfillment condition includes: a fulfillment condition for at least one of following: the time period required to perform the first sweeping on the area to be swept, or the number of sweeping repetitions on the area to be swept. For example, in a case where the first sweeping time fulfills a condition that the first sweeping time is lower than the preset total sweeping time, for smaller areas to be swept, the second cleaning will be triggered since the first cleaning time will be less than the total cleaning time; and for larger areas to be swept, the second cleaning will not be triggered since the first cleaning time will be greater than the total cleaning time. The number of sweeping repetitions on the area to be swept fulfills a condition that the number of sweeping repetitions on the area to be swept is greater than 1. When the number of sweeping repetitions on the area to be swept is less than or equal to 1, the second sweeping will not be triggered. When the number of sweeping repetitions on the area to be swept is greater than 1, the second sweeping will be triggered. Thus, different conditions can fulfill the user's diversified selections for the area to be swept under different conditions, thereby giving the user a better experience.

In some other embodiments, the fulfillment condition for the time period required to perform the first sweeping on the area to be swept includes: the time period required to perform the first sweeping on the area to be swept being less than a threshold value. In an embodiment, the threshold value is the total sweeping time, and the total sweeping time may be a value set by the system, which may namely be the total time that the user can accept the sweeper to work in a certain area as obtained according to the big data, or the total time set by the user according to his/her own needs. In an embodiment, selecting the parameter as the first sweeping time for the area to be swept is to bring the user a better experience and prevent the sweeper from working too long to affect the user's life and mood.

In some other embodiments, the fulfillment condition for the number of sweepings repetitions on the area to be swept includes: the number of sweeping repetitions on the area to be swept being greater than 1. In an embodiment, selecting the parameter as the number of sweeping repetitions can satisfy the need for the degree of cleanliness of the area to be swept. For example, in general sweeping for three times can satisfy the user's need for cleanliness, and thus the number of repetitions can be defaulted to be 3 or set by the user to be 3.

According to a second aspect of the present disclosure, the present disclosure further provides a sweeping apparatus, which includes a first sweeping module and a second sweeping module. The first sweeping module is configured to perform first sweeping on an area to be swept in a turn-back manner along a first sweeping direction. The second sweeping module is configured to perform, based on a sweeping parameter fulfillment condition, second sweeping on the area to be swept in a turn-back manner along a second sweeping direction, where the second sweeping direction is perpendicular to the first sweeping direction.

The sweeping apparatus has the same technical effects as the method described above and will not be repeated herein.

According to a third aspect of the present disclosure, the present disclosure further provides a sweeper that is configured to perform the method according to any one of the above embodiments. The sweeper has the same technical effects as the method described above and will not be repeated herein.

According to a fourth aspect of the present disclosure, the present disclosure further provides a computer-readable medium having computer-readable instructions stored thereon. The computer-readable instructions cause the sweeper to perform the method according to any one of the above embodiments, which has the same technical effects as the method and will not be repeated herein.

According to a fifth aspect of the present disclosure, the present disclosure further provides a sweeping device, which includes: a processor and a memory configured to store executable instructions. The processor is configured to, by executing the executable instructions stored in the memory, cause the sweeping device to perform the method according to any one of the above embodiments, which has the same technical effects as the method and will not be repeated herein.

It should be understood that the specific embodiments of the present disclosure are only for exemplary illustration or explanation of the principle of the present disclosure, and do not constitute any limitation to the present disclosure. Therefore, any modification, equivalent replacement, improvement, and the like as made without deviating from the spirit and scope of the present disclosure shall be regarded as falling within the protection scope of the present disclosure. In addition, the claims appended to the present disclosure are intended to cover all variations and modifications that fall within the scope and boundaries of the appended claims, or the equivalent form of such scope and boundaries.

The steps in the method according to embodiments of the present disclosure may be sequenced, combined, and deleted as necessary.

## Claims

1. A sweeping method, comprising:
performing first sweeping on an area to be swept in a turn-back manner along a first sweeping direction; and
performing, based on a sweeping parameter fulfillment condition, second sweeping on the area to be swept in a turn-back manner along a second sweeping direction, wherein
the second sweeping direction is perpendicular to the first sweeping direction.

2. The sweeping method according to claim 1, wherein prior to performing the second sweeping on the area to be swept in the turn-back manner along the second sweeping direction, the method further comprises:
acquiring a sweeping parameter; and
determining whether the sweeping parameter fulfills a preset condition.

3. The sweeping method according to claim 2, wherein the acquiring the sweeping parameter comprises:
acquiring at least one of following: a time period required to perform the first sweeping on the area to be swept, or a number of sweeping repetitions on the area to be swept.

4. The sweeping method according to claim 3, wherein the sweeping parameter fulfillment condition comprises:
a fulfillment condition for at least one of following: the time period required to perform the first sweeping on the area to be swept, or the number of sweeping repetitions on the area to be swept.

5. The sweeping method according to claim 4, wherein the fulfillment condition for the time period required to perform the first sweeping on the area to be swept comprises: the time period required to perform the first sweeping on the area to be swept being less than a threshold value.

6. The sweeping method according to claim 4, wherein the fulfillment condition for the number of sweeping repetitions on the area to be swept comprises:
the number of sweeping repetitions on the area to be swept being greater than 1.

7. A sweeping apparatus, comprising:
a first sweeping module, configured to perform first sweeping on an area to be swept in a turn-back manner along a first sweeping direction; and
a second sweeping module, configured to perform, based on a sweeping parameter fulfillment condition, second sweeping on the area to be swept in a turn-back manner along a second sweeping direction, wherein
the second sweeping direction is perpendicular to the first sweeping direction.

8. A sweeper, configured to perform the sweeping method according to any one of claims 1 to 6.

9. A computer-readable medium having computer-readable instructions stored thereon, wherein the computer-readable instructions cause the sweeper to perform the sweeping method according to any one of claims 1 to 6.

10. A sweeping device, comprising: a processor, and a memory configured to store executable instructions, wherein
the processor is configured to, by executing the executable instructions stored in the memory, cause the sweeping device to perform the sweeping method according to any one of claims 1 to 6.
